# EUROPEAN PATENT APPLICATION

(11) **EP 4 484 480 A1**
(43) Date of publication of application: **01.01.2025**
(21) Application number: 24166756.7
(22) Date of filing: 27.03.2024
(51) Int. Cl.: C08K 3/22, C09D 175/04, C14C 11/00, B32B 27/40

(54) **LEATHER TREATMENT METHOD TO INCREASE THE ABRASION RESISTANCE AND MATERIAL FOR MAKING LEATHER PRODUCTS**

(30) Priority: 26.06.2023 IT 202300013137
(71) Applicant: Conciaria Mondovì S.r.l, 12084 Mondovi' (CN) (IT)
(72) Inventor: Falco, Claudio, 12084 Mondovi' (CN) (IT)
(74) Representative: Bottino, Giovanni

(57) **Abstract**

Method for treating leathers to increase abrasion resistance, which method provides for superimposing a finishing layer on a leather layer.

The superimposition of the finishing layer provides for the following steps:
a) making a mixture for the production of a first finishing layer (102) by a mixing of an inert material with a determined granulometry and a compound comprising resins and polyurethanes,
b) coating (103) the leather layer with the first layer of finish.

## Description

The present invention relates to a method for treating leathers to increase abrasion resistance.

The method provides for superimposing a finishing layer on a leather layer.

The one just described is the common methodology known to the state of the art to which the leathers are subjected to limit deterioration of the leathers themselves and consequent wear.

Currently, the demand for materials for the manufacture of leather products, such as for example leather goods as well as gloves, footwear or clothing, which have high wear resistance characteristics, is constantly increasing.

Think, for example, of all those sports disciplines, such as for example motor racing and motorcycling, which require suits and gloves that are particularly resistant after rubbing and that preserve the safety of the riders by protecting their skin and body from burns, abrasions or inflammations.

Still in the sports field, the demand for leather products with high abrasion resistance is constantly increasing and fuels a particularly interesting market.

The interest in leathers with high abrasion resistance is not limited to the sports field, since the possibility of covering suitcases, trolleys or similar with leather, in order to guarantee a particularly a pleasant aesthetic appearance is particularly interesting.

However, the currently known treatment methods fail to guarantee the manufacture of leathers with a high degree of abrasion resistance if in contact with rough surfaces, such as asphalt.

The leathers required by the market, in fact, in addition to having to have a high abrasion resistance, must be sufficiently flexible so that they can be processed and can ensure, in the case of a product to be worn, sufficient comfort for the user.

There is therefore a need which is not satisfied by the methods known to the state of the art to realise a method for treating leathers that solves the disadvantages set out above.

The present invention achieves the above objects through a method for treating leathers as described above, wherein the superimposition of the finishing layer provides for the following steps:
a) making a mixture for the production of a first finishing layer by a mixing of an inert material with a determined granulometry and a compound comprising resins and polyurethanes,
b) coating the leather layer with the first layer of finish.

The use of an inert material combined with a compound comprising resins and polyurethanes is a particularly innovative aspect, since the methods known to the state of the art do not provide for a coating comprising inert material.

It is specified that any material with anti-abrasive characteristics, such as for example aluminium oxide, silicon carbide or the like, can be used as the inert material.

According to a preferred embodiment, the method subject matter of the present invention provides, after step b), the following steps:
c) making a mixture for the production of a second finishing layer by a mixing of an inert material with a finer granulometry than the previous step a), and a compound comprising resins and polyurethanes,
d) coating the first finishing layer with the second finishing layer.

The presence in combination of the two finishing layers, superimposed on each other and made according to different granulometries of the inert material, allows to obtain a high abrasion resistance of the leather, however guaranteeing elasticity and workability of the leather.

In particular, the mixture of resins and polyurethanes has been conceived to have an excellent mechanical resistance to abrasion with a good elasticity to allow the particles of the inert material to be stably bonded inside the first finishing layer.

The second finishing layer also allows to make the first finishing layer more homogeneous and resistant, increasing its abrasion resistance without compromising its flexibility.

Starting from the generic concept just described, it is possible to envisage some possible variants of the method subject matter of the present invention, aimed at improving the mechanical characteristics of the treated leather.

For example, according to a further embodiment, a step prior to the step of making a first finishing layer is provided, which step provides for compacting the fibrous structure of the leather layer.

This compacting allows the leather to be made stiffer, favouring the insertion of the inert material.

It is possible to provide any inert material known to the state of the art and with abrasion resistance characteristics.

However, according to a preferred embodiment, the first and the second finishing layer are obtained by a mixing of aluminium oxide with a compound formed by resins and polyurethanes and crosslinking material.

The cross-linking material allows to increase the consolidation of the finishing layers.

According to a further embodiment, step b) of depositing the first finishing layer is obtained by using a roller spreader.

The choice of this methodology is due to the fact that the first finishing layer is more compact than a layer with an equal weight of mixture distributed on the leather obtained with a spray machine, which would inevitably be less homogeneous because of a distribution by nebulizing the mixture.

On the contrary, preferably step d) of depositing the second finishing layer is obtained by spraying.

The spraying procedure allows to achieve advantages from the point of view of the amount of material used and of the distribution of the sprayed material and is particularly effective since a homogeneous distribution of the first finishing layer has already been obtained.

The deposition of a mixture by spraying is a known procedure, but spraying an anti-abrasive material, such as the inert material, is particularly innovative.

According to a further embodiment variant of the method subject matter of the present invention, after step d) of depositing the second finishing layer, a step e) relating to hot pressing is provided.

This step of hot pressing allows the first and the second finishing layer to be stably compacted to the leather layer.

Further finishing-off steps may also be present, after hot pressing.

For example, it is possible to provide a further step of coating the finishing layer obtained by spray deposition of a mixture of resins and polyurethanes.

This step, which takes place without the presence of inert material, is particularly useful for colour toning.

Then it is proceeded with fixing the entire assembly by using fixative material.

The absence of inert material in these steps also makes it possible to obtain a mixture, suitably crosslinked, which is softer than the mixtures relating to the first and second finishing layer.

In addition, the use of fixative material allows the first and second finishing layer to be further stabilised.

Finally, it is specified that the various method steps described, taken individually or in combination, allow to achieve a method that allows to obtain a significantly increased mechanical resistance to abrasion compared to a traditional leather with a finishing layer obtained with a mixture of resin and polyurethanes.

The wear of the leather treated with the method subject matter of the present invention is considerably reduced.

By monitoring the wear of the leather using as a reference parameter both the loss of weight and thickness of the leather subjected to an abrasion test with the Martindale Method, and the number of cycles necessary for the deterioration of the specimen (until it reaches the through hole), it is evident that the treatment subject matter of the present invention considerably reduces, depending on the type of finish, the normal abrasion of a finished-off leather according to the methods known to the state of the art.

In view of the advantages of the method for treating leather set forth above, the present invention also relates to a material for making products made of leather, comprising a leather layer and a finishing layer.

In particular, the finishing layer provides a first finishing layer comprising a mixture of an inert material with a determined granulometry and a compound comprising resins and polyurethanes.

The inert material used can be a material with anti-abrasive properties, such as the inert material described in relation to the method subject matter of the present invention.

According to a preferred embodiment, the finishing layer of the material subject matter of the present invention comprises a second finishing layer comprising a mixture of an inert material with a finer granulometry than the first finishing layer, and a compound comprising resins and polyurethanes.

The presence of the two finishing layers in combination, within a single leather coating layer, allows obtaining the above advantages, especially with regard to the increased abrasion resistance of the leather.

It is also specified that the material obtained makes it possible to obtain a leather that is particularly useful for the manufacture of clothing for pilots, motorcyclists and motorists, for covering suitcases, for technical or sports footwear as well as for all upholstery in the luxury car and racing car sector, for the manufacture of seats or similar finishes.

As described above, preferably, a third layer consisting of a mixture of resins and polyurethanes is provided, which third layer is superimposed on the second finishing layer.

Finally, advantageously, the mixture of resins and polyurethanes provides for the addition of crosslinking material.

Optional features of the method and of the material of the invention are contained in the appended dependent claims, which form an integral part of the present description.

These and other features and advantages of the present invention will become clearer from the following disclosure of some embodiment examples illustrated in the accompanying drawings in which:
figure 1 illustrates a flowchart aimed at showing the steps of a possible embodiment of the method subject matter of the present invention;
figure 2 illustrates a section of a principle diagram aimed at showing the composition of a possible embodiment of the material for the manufacture of leather products subject matter of the present invention.

It is specified that the figures attached to the present patent application illustrate only some possible embodiments of the method for treating leathers and of the material for the manufacture of leather products subject matter of the present invention in order to better understand the advantages and characteristics described.

Such embodiments are therefore to be understood for purely illustrative and non-limiting purposes of the inventive concept of the present invention, i.e., that of realizing a method for treating leathers that allows obtaining a leather with high abrasion resistance characteristics, maintaining flexibility and workability of the material.

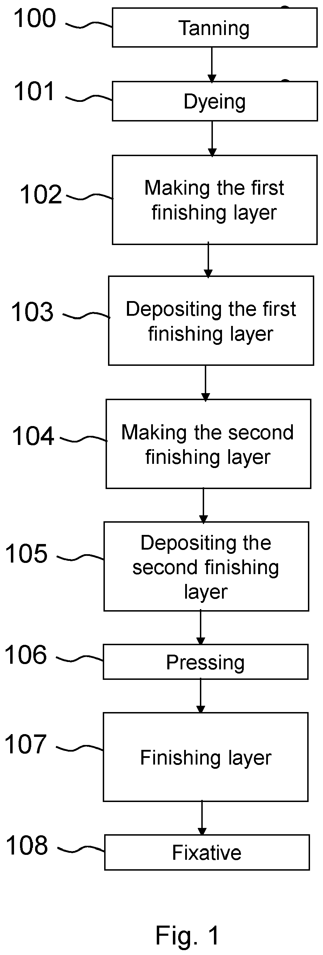

With particular reference to figure 1, a block diagram of a possible embodiment of the method subject matter of the present invention is illustrated.

Before proceeding with the various steps of the method illustrated and described, the leathers may undergo pre-treatments.

For example, it can be envisaged receiving the raw leathers on which to perform a tanning treatment, step 100, or semi-finished materials.

Depending on the final product to be obtained, a dyeing step 101 is provided, in which it is possible to add all those chemicals known to the state of the art, which are used to obtain determined leather performances.

Therefore, once the tanning 100 is finished, the method subject matter of the present invention may provide for the dyeing/fattening step, step 101, in which it is proceeded with the compaction of the structure of the leather by using resins and tannins suitable for making the fibrous structure of the leather compact.

After the dyeing step 101, in which all the mechanical characteristics of interest are obtained, the material becomes a semi-finished material on which to perform step 102.

In the next step, step 102, it is proceeded with making a first finishing layer which is obtained by inserting a percentage of inert material with anti-abrasive characteristics, such as for example Aluminium Oxide, silicon carbide or the like, into a mixture of resins and polyurethanes suitably selected with the addition of a suitable crosslinking material.

As anticipated, it is possible to provide any inert material known to the state of the art, which, preferably, has anti-abrasive characteristics.

Obviously, the greater the resistance of the inert material, the greater the wear resistance of the material resulting from the method subject matter of the present invention.

By way of example only, it is specified that, in order to ensure adequate abrasion resistance, materials whose hardness according to the Mohs scale is at least 5 can be used.

As described, again by way of example only, titanium dioxide, which has a hardness of about 6, can be chosen, as can aluminium oxide be chosen, which has a hardness of 9.

Subsequently, step 103, the deposition of the first finishing layer on the leather, obtained by using a roller spreader, also known as "roll coating" is provided.

Therefore, it is started making a leather with an external anti-abrasion coating and making a film to protect the leather itself.

After step 103, making a second finishing layer is provided, step 104, composed of resins and polyurethanes which contains therein inert material with a finer granulometry than the previous one.

The deposition of the second finishing layer on the first finishing layer, step 105, is carried out by a spraying process.

It is specified that the spraying step, step 105, can be repeated more than once, based on the operational needs, the uses of the leather and the mechanical characteristics of interest.

At the end of this step, it is proceeded with hot pressing, step 106 and, subsequently, preferably by spraying, step 107, a finishing-off step is provided, without however adding further inert material.

Step 108 then provides for fixing a further coating film using a suitable mixture of resins, polyurethanes and crosslinkers which serve to stabilise all the layers above the leather layer with the leather itself.

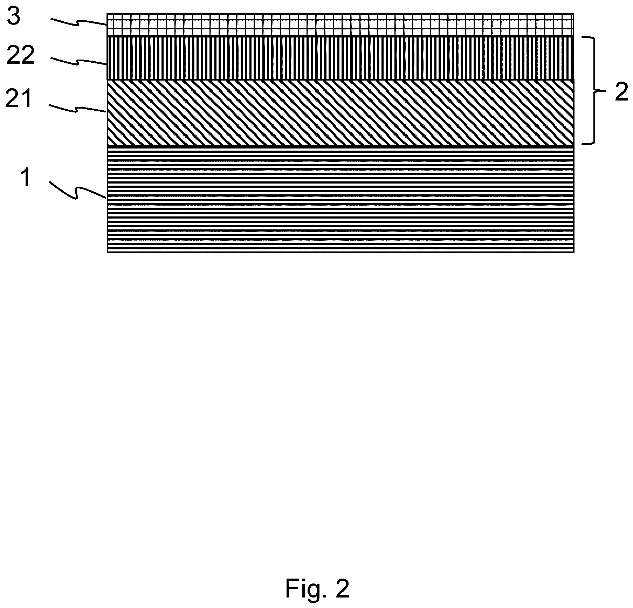

The treatment method described so far thus makes it possible to obtain a particular material for the manufacture of leather products, a principle diagram of which is illustrated in figure 2.

Figure 2 illustrates a section of the material that is the subject matter of the present invention.

In particular, the material subject matter of the present invention consists of a leather layer 1 and a finishing layer 2.

The finishing layer 2 instead preferably consists of at least two parts, of which:
a first finishing layer 21 comprising a mixture of an inert material with a determined granulometry and a compound comprising resins and polyurethanes,
a second finishing layer 22 comprising a mixture of an inert material with a finer granulometry than the first finishing layer, and a composite comprising resins and polyurethanes.

For illustrative simplicity, the interface between the leather layer 1 and the first finishing layer 21 is illustrated as a flat line, however, the first finishing layer provides inert material aimed at filling and creeping between the fibres of the leather layer 1.

Similarly, the interface between the other layers, i.e. between the layer 21 and the layer 22 and between the layer 22 and the layer 3, may also have a jagged line, adapted to follow the course of the fibres of the leather layer 1.

Above the second finishing layer 22 there is provided a third layer 3 consisting of a mixture of resins and polyurethanes.

Furthermore, it is specified that, regardless of the layer, be it the first 21, the second 22 or the third 3 one, the mixture of resins and polyurethanes provides for the addition of crosslinking material.

Finally, experimental tests were carried out on the leather obtained by the method subject matter of the present invention.

In particular, the Martindale method,
which is commonly used to analyse the resistance of natural or synthetic fabrics and leathers to wear, was carried out on the leather.

Therefore, the following tests were carried out:

### 1) Determination of sample breakage

Under a certain load, the sample is rubbed against the abrasive in the Lissajous curve plane and the total number of rubs is counted to determine the abrasion resistance of the fabric when the sample breaks.

### 2) Determination of mass loss

Under a certain load, the specimen in the equipment is rubbed against the abrasive in a Lissajous curved plane, when the specimen has been rubbed for a specific number of times, the abrasion resistance is determined by mass difference before and after rubbing.

In order to carry out these tests, the leather treated with the method subject matter of the present invention included goatskin, 1.3 millimetres thick.

A pressure of 9kPA was applied to the specimen and a P180 abrasive paper was used.

It was found that after 2000 cycles, the weight loss of the standard product was equal to 15%, while in the product obtained by the method subject matter of the present invention it was equal to 10%.

After 2500 cycles, the weight loss of the standard product was 26% while that of the product obtained by the method subject matter of the present invention is 11%.

As regards the thickness loss, after 2000 cycles the standard product had a 17% loss of the original thickness, while for the product obtained by the method subject matter of the present invention the loss was 13%.

After 2500 cycles the loss was 19% for the standard product, while for the product obtained by the method subject matter of the present invention the loss remained at 13%.

After 2690 cycles the standard product got pierced while the product obtained by the method subject matter of the present invention reached a total of 5300 cycles before getting pierced.

While the invention is susceptible to various modifications and alternative constructions, some preferred embodiments have been shown in the drawings and described in detail.

It should be understood, however, that there is no intention to limit the invention to the specific illustrated embodiment but, on the contrary, the aim is to cover all the modifications, alternative constructions and equivalents falling within the scope of the invention as defined in the claims.

The use of "for example", "etc.", "or" indicates non-exclusive alternatives without limitation, unless otherwise indicated.

The use of "includes" means "includes but is not limited to", unless otherwise stated.

## Claims

1. Method for treating leathers to increase abrasion resistance, which method provides for superimposing a finishing layer on a leather layer,
**characterised in that** the superimposition of the finishing layer provides for the following steps:
a) making a mixture for the production of a first finishing layer (102) by a mixing of an inert material with a determined granulometry and a compound comprising resins and polyurethanes,
b) coating (103) the leather layer with the first layer of finish.

2. Method according to claim 1, wherein, after step b, the following steps are provided:
c) making a mixture for the production of a second finishing layer (104) by a mixing of an inert material with a finer granulometry than step a), and a compound comprising resins and polyurethanes,
d) coating (105) the first finishing layer with the second finishing layer.

3. Method according to claim 1, wherein a step prior to step a) is provided, which provides for compacting (101) the fibrous structure of the leather layer.

4. Method according to one or more of the preceding claims, wherein the first and/or the second finishing layer are obtained by a mixing of inert material with a compound formed by resins and polyurethanes and crosslinking material.

5. Method according to one or more of the preceding claims, wherein step b) (103) is obtained by using a roller spreader.

6. Method according to one or more of the preceding claims, wherein step d) (105) is obtained by spraying.

7. Method according to one or more of the preceding claims, wherein after step d) a step e) relating to hot pressing (106) is provided.

8. Method according to one or more of the preceding claims, wherein a further step of coating (107) the finishing layer obtained by spray deposition of a mixture of resins and polyurethanes is provided.

9. Material for the manufacture of leather products comprising a leather layer (1) and a finishing layer (2),
**characterized in that**
the finishing layer provides a first finishing layer (21) comprising a mixture of an inert material with a determined granulometry and a compound comprising resins and polyurethanes.

10. Material according to claim 9, wherein said finishing layer comprises a second finishing layer (22) comprising a mixture of an inert material with a finer granulometry than the first finishing layer, and a compound comprising resins and polyurethanes.

11. Material according to claim 9 or claim 10, wherein a third layer (3) consisting of a mixture of resins and polyurethanes is provided, which third layer is superimposed on the second finishing layer.

12. Material according to one or more of claims 9 to 11, wherein the mixture of resins and polyurethanes provides for the addition of crosslinking material.
